(19) **Europäisches Patentamt**
European Patent Office
Office européen des brevets

(11) **EP 4 343 898 A1**

(12) **EUROPÄISCHE PATENTANMELDUNG**

(43) Veröffentlichungstag:
**27.03.2024 Patentblatt 2024/13**

(21) Anmeldenummer: **22196772.2**

(22) Anmeldetag: **21.09.2022**

(51) Internationale Patentklassifikation (IPC):
*H01M 4/86* (2006.01)    *H01M 4/88* (2006.01)
*H01M 8/0232* (2016.01)    *H01M 8/0245* (2016.01)

(52) Gemeinsame Patentklassifikation (CPC):
**H01M 8/0232; H01M 4/8605; H01M 4/8657;
H01M 4/8807;** H01M 8/0245

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **iGas energy GmbH
52222 Stolberg (DE)**

(72) Erfinder:
• **Die Erfinder haben auf ihr Recht verzichtet, als
solche bekannt gemacht zu werden.**

(74) Vertreter: **Meinken, Claudia
MZPatent
Königsallee 27
40212 Düsseldorf (DE)**

(54) **KOMBINATION VON PORÖSER TRANSPORTSCHICHT UND BIPOLARPLATTE FÜR ELEKTROCHEMISCHE ZELLEN**

(57)    Die Erfindung betrifft ein Verbundbauteil **1** für elektrochemische Zellen **18** zur Verwendung als poröse Transportschicht **2** und Bipolarplatte **3.** Gegenstand der Erfindung sind ferner elektrochemische Zellen **18**, Bauteile für Stapel elektrochemischer Zellen **21** und Stapel elektrochemischer Zellen **22,** die das erfindungsgemäße Verbundbauteil **1** umfassen.

**Figur 1**

EP 4 343 898 A1

**Beschreibung**

Die Erfindung betrifft ein Verbundbauteil für elektrochemische Zellen zur Verwendung als poröse Transportschicht und Bipolarplatte. Gegenstand der Erfindung sind ferner elektrochemische Zellen, Bauteile für Stapel elektrochemischer Zellen und Stapel elektrochemischer Zellen, die das erfindungsgemäße Verbundbauteil umfassen.

Die porösen Transportschichten (PTLs) sind Schlüsselkomponenten von elektrochemischen Zellen wie z.B. PEM Brennstoffzellen oder Elektrolyseuren und haben einen signifikanten Einfluss auf die Zellleistung. Sie leiten die Elektronen zwischen der Katalysatorschicht und der Separatorplatte (Bipolarplatte), müssen jedoch auf der anderen Seite eine optimale Zufuhr und Abfuhr der Reaktionsmedien (Medientransport von Gas und Wasser) gewährleisten.

Medientransport und Elektronentransport (bzw. ohmscher Widerstand) werden durch die Porosität der PTLs beeinflusst. Eine hohe Porosität führt zu einem besseren Medientransport, erhöht jedoch den ohmschen Widerstand. Um einen ordnungsgemäßen Wasser- und Gastransport zu ermöglichen, sollte die Porosität der Anoden-PTL für die PEM Elektrolyse im Bereich von 30 bis 50 % liegen. Um einen guten Kompromiss zwischen elektrischem Widerstand und Massentransport zu erreichen, werden Porengrößen zwischen 10 und 13 $\mu$m benötigt [Grigoriev, S.A., P. Millet, S.A. Volobuev, and V.N. Fateev, Optimization of porous current collectors for PEM water electrolysers. International Journal of Hydrogen Energy, 2009. 34(11): p. 4968-4973].

Eine weitere wichtige Eigenschaft von PTLs ist die Oberflächenrauhigkeit. Diese sollte möglichst gering sein, um einen hohen Kontakt mit der Katalysatorschicht zu ermöglichen, wenn dieser auf einen Festkörperelektrolyt (z.B. Membran) beschichtet ist. Deshalb kommen als PTLs häufig Gewebe, Vliese oder pulvergesintertes Metallpulver zum Einsatz. Um die Homogenität der Oberfläche zusätzlich zu erhöhen, hat es sich als vorteilhaft herausgestellt, eine zusätzliche mikroporöse Schicht auf die PTLs aufzubringen.

US 8,945,790 B2 offenbart, Anordnungen von mikroporösen Schichten in Gasdiffusionsschichten zu verwenden.

WO 2020/020467 A1 offenbart ein Verfahren zur Herstellung einer PTL, die eine poröse Metallschicht mit einer darauf aufgebrachten mikroporösen Metallschicht aufweist.

EP 3 958 360 A1 offenbart eine poröse Transportelektrode, die mehrere gesinterte poröse Schichten und eine elektrochemisch aktive Schicht umfasst.

Bei der PEM-Brennstoffzelle werden üblicherweise sowohl anodenseitig als auch kathodenseitig PTLs auf Kohlenstoffbasis eingesetzt.

EP 3 011 625 B1 offenbart eine Gasdiffusionselektrode, die ein elektrisch leitendes Substrat, eine Gasdiffusionsschicht und eine aktive Schicht umfasst, wobei die Gasdiffusionsschicht und die aktive Schicht ein elektrisch leitendes Kohlenstoffmaterial umfassen.

Bei der Elektrolyse neigt Kohlenstoffmaterial bei hohen Überspannungen auf der Anodenseite zur Korrosion. Um die Stabilität bei hohen Spannungen und im sauren Milieu zu verbessern, bestehen PTLs hier häufig aus porösem Titan.

DE 10 2015 111 918 A1 offenbart die Verwendung mindestens einer mikroporösen, aus Titan bestehenden oder Titan umfassenden Schicht, die durch Plasmaspritzen im Vakuum auf ein Substrat aufgebracht wird.

Um die Korrosionsbeständigkeit zu erhöhen, offenbart WO 2018/078157 eine BPP und eine PTL, die eine Schicht umfassen, die eine bestimmte Menge an Ir, Ru, Rh, Os, deren Oxide enthält.

Ein weiteres wichtiges Bauteil in einer elektrochemischen Zelle ist die Bipolarplatte (BPP). Die Funktion einer Bipolarplatte ist die physische Trennung der einzelnen elektrochemischen Zellen eines Zellstapels. Die häufig über Fräsen oder Prägen eingebrachte Strömungsverteilerstruktur (Flow Field) ermöglicht eine gute Verteilung der Medien über die gesamte Zellfläche. Außerdem muss die BPP einen guten elektrischen Kontakt zur PTL aufweisen, um eine hohe Leitfähigkeit der Elektronen zu gewährleisten und ohmsche Verluste in der elektrochemischen Zelle zu minimieren.

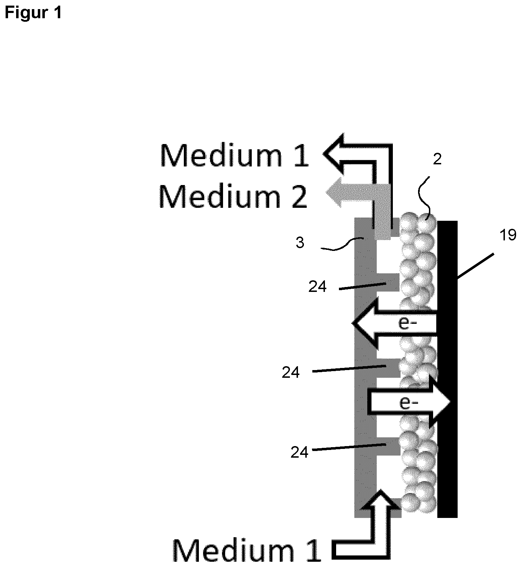

**Figur 1** zeigt schematisch den Medien- und Elektronenfluss in einer typischen elektrochemischen Zelle.

Um die Kontaktwiderstände zwischen PTL und BPP gering zu halten, wird die elektrochemische Zelle mit einem Anpressdruck bis zu 3 MPa verpresst. Da sich jedoch über die Zeit eine Passivierung der Komponenten vollzieht, erhöht sich der Kontaktwiderstand zwischen PTL und BPP über die Zeit und die Zellspannung steigt (Elektrolysezelle) bzw. sinkt (galvanische Zelle), was zu einem schlechteren Wirkungsgrad der Zelle führt. Der Zellenwirkungsgrad einer Wasserelektrolyse ist beispielsweise die Zellspannung im Verhältnis zu im Wasser gebundener Energie:

$$\eta_Z = \frac{E^0_H}{E_Z}$$

Um diese Degradation zu reduzieren, wird die PTL und die BPP an ihren Kontaktstellen beschichtet.

Averys et. al. schreiben der PTL und der BPP in ihrem 3-zelligen Stack die Hälfte der Stackkosten zu. Um die Kosten zu senken, werden alternative Herstellungsverfahren für die PTL aber auch die BPP diskutiert [Ayers, K.E., E.B. Anderson, C. Capuano, B. Carter, L. Dalton, G. Hanlon, J. Manco, and M. Niedzwiecki, Research Advances towards Low Cost, High Efficiency PEM Electrolysis. ECS Transactions, 2010. 33(1): p. 3-15].

EP 2 985 096 B1 offenbart eine Gasdiffusionselektrode mit einer Mehrzahl von schichtweise angeordneten Streckmetalllagen, wobei benachbarte Streckmetalllagen in Kontaktpunkten in ihrer einander zugewandten Flachseiten mittels Widerstands-Impulsschweißen miteinander verbunden sind und wobei zumindest eine der Streckmetalllagen in ihrer Längsausrichtung um 90° verdreht zu einer ihrer benachbarten Streckmetalllagen angeordnet ist.

US 6,280,870 B1 offenbart einen Brennstoffzellenstapel mit Gasdiffusionsschichten, die eingebaute Strömungskanäle umfassen.

WO 2004/086542 A2 offenbart, die Gasdiffusionsschicht mit der BPP zu verschweißen.

EP 3 686 318 A1 offenbart eine PTL, die auf mehreren gesinterten porösen Schichten basiert.

Eine Aufgabe der vorliegenden Erfindung ist es, eine PLT für elektrochemische Zellen mit verbesserten Eigenschaften zur Verfügung zu stellen.

Diese Aufgabe wird durch die Erfindung gemäß den Patentansprüchen 1 bis 15 gelöst. Die Erfindung kombiniert die PTL 2 und die BPP 3 in einem Verbundbauteil 1.

Das Verbundbauteil 1 umfasst drei Schichten. In besonderen Ausführungsformen besteht das Verbundbauteil 1 aus drei Schichten. Die drei Schichten sind: eine Schicht poröses Sintermetall 4, eine Schicht Streckmetall 7, ein Blech 10.

Um die Kontaktwiderstände zwischen PTL 2 und BPP 3 zu reduzieren und über die Zeit konstant zu halten und um die Beschichtung der PTL 2 und der BPP 3 einzusparen, ist es von Vorteil, die BPP 3 und PTL 2 in einem Verbundbauteil **1** auszuführen.

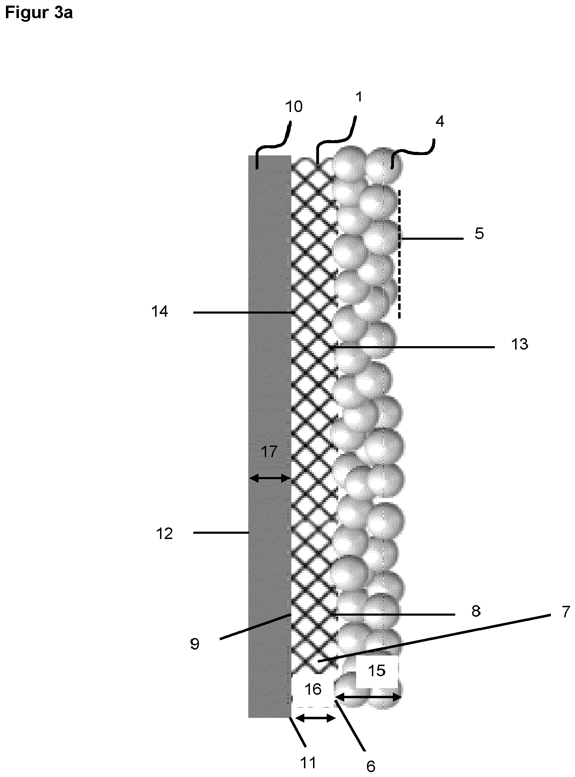

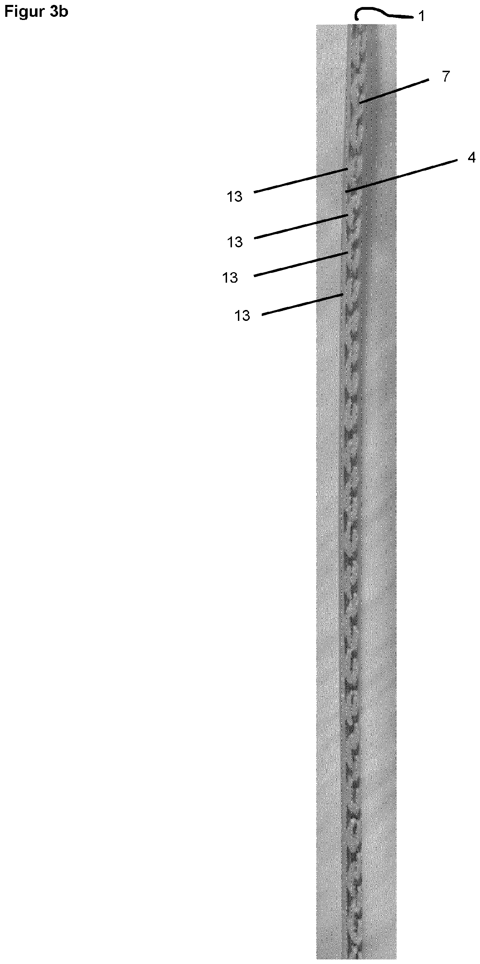

**Figur 3a** zeigt schematisch die drei Schichten des erfindungsgemäßen Verbundbauteils **1.**

Die Schicht poröses Sintermetall **4** weist eine erste Flachseite **5** und eine der ersten Flachseite gegenüberliegende zweite Flachseite **6** auf, die in einem Abstand **15** zueinander angeordnet sind, vorzugsweise parallel zueinander angeordnet sind. Der Abstand **15** der ersten Flachseite **5** und der der ersten Flachseite gegenüberliegenden zweiten Flachseite **6** des porösen Sintermetalls ist gleich der Dicke **15** der Schicht porösen Sintermetalls **4.**

Die Schicht Streckmetall **7** weist eine erste Flachseite **8** und eine der ersten Flachseite gegenüberliegende zweite Flachseite **9** auf, die in einem Abstand **16** zueinander angeordnet sind, vorzugsweise parallel zueinander angeordnet sind. Der Abstand **16** der ersten Flachseite **8** und der der ersten Flachseite gegenüberliegenden zweiten Flachseite **9** des Streckmetalls **7** ist gleich der Dicke **16** der Schicht Streckmetall **7.**

Das Blech **10** weist eine erste Flachseite **11** und eine der ersten Flachseite gegenüberliegende zweite Flachseite **12** auf, die in einem Abstand **17** zueinander angeordnet sind, vorzugsweise parallel zueinander angeordnet sind. Der Abstand **17** der ersten Flachseite **11** und der der ersten Flachseite gegenüberliegenden zweiten Flachseite **12** des Blechs **10** ist gleich der Dicke **17** des Blechs **7.**

Gegenstand der Erfindung ist ein Verbundbauteil **1** für elektrochemischen Zellen **18** zur Verwendung als poröse Transportschicht (PTL) **2** und Bipolarplatte (BPP) **3** umfassend oder bestehend aus

eine Schicht poröses Sintermetall **4,**
eine Schicht Streckmetall **7,**
ein Blech **10,**
wobei die Schicht poröses Sintermetall **4** eine erste Flachseite **5** und eine der ersten Flachseite gegenüberliegende zweite Flachseite **6** aufweist,
wobei die Schicht Streckmetall **7** eine erste Flachseite **8** und eine der ersten Flachseite gegenüberliegende zweite Flachseite **9** aufweist,
wobei das Blech **10** eine erste Flachseite **11** und eine der ersten Flachseite gegenüberliegende zweite Flachseite **12** aufweist,
wobei die Schicht Streckmetall **7** zwischen der Schicht porösem Sintermetall **4** und dem Blech **10** angeordnet ist und
wobei die erste Flachseite der Schicht Streckmetall **8** mit der Schicht porösem Sintermetall **4** verbunden ist und
die zweite Flachseite der Schicht Streckmetall **8** mit dem Blech **10** verbunden ist.

Die Kombination aus PTL **2** und BPP **3** in einem einzigen Verbundbauteil **1** senkt die elektrischen Widerstände in einer elektrochemischen Zelle **18** und steigert somit den Wirkungsgrad. Außerdem können die die Kosten für die Herstellung dieser beiden Bauteile gesenkt werden.

In bevorzugten Ausführungsformen des Verbundbauteils **1** bestehen die Schicht poröses Sintermetall **4,** die Schicht Streckmetall **7** und das Blech **10** im Wesentlichen aus demselben Material.

In bevorzugten Ausführungsformen des Verbundbauteils **1** bestehen die Schicht poröses Sintermetall **4,** die Schicht Streckmetall **7** und das Blech **10** aus demselben Material.

Die erste Flachseite der Schicht Streckmetall **8** und die zweite Flachseite der Schicht poröses Sintermetall **6** sind in dem Verbundbauteil **1** miteinander in Kontakt. Die erste Flachseite der Schicht Streckmetall **8** und die zweite Flachseite der Schicht poröses Sintermetall **6** weisen mindestens einen Kontaktpunkt **13** auf, vorzugsweise weisen die erste Flachseite der Schicht Streckmetall **8** und die zweite Flachseite der Schicht poröses Sintermetall **6** mehrere bzw. eine Vielzahl von Kontaktpunkten **13** auf. Die erste Flachseite der Schicht Streckmetall **8** und die zweite Flachseite der Schicht poröses Sintermetall **6** sind an dem mindestens einen Kontaktpunkt **13,** vorzugsweise an mehreren Kontaktpunkten **13,** besonders bevorzugt allen Kontaktpunkten **13** miteinander verbunden.

Die zweite Flachseite der Schicht Streckmetall **9** und die erste Flachseite des Blechs **11** sind in dem Verbundbauteil **1** miteinander in Kontakt. Die zweite Flachseite der Schicht Streckmetall **9** und die erste Flachseite des Blechs **11** weisen mindestens einen Kontaktpunkt **14** auf, vorzugsweise weisen die zweite Flachseite der Schicht Streckmetall **9** und die erste Flachseite des Blechs **11** mehrere bzw. eine Vielzahl von Kontaktpunkten **14** auf. Die zweite Flachseite der Schicht Streckmetall **9** und die erste Flachseite des Blechs **11** sind an dem mindestens einen Kontaktpunkt **14,** vorzugsweise an mehreren Kontaktpunkten **14,** besonders bevorzugt an allen Kontaktpunkten **14** miteinander verbunden sind.

Die Verbindung an den Kontaktpunkten **13, 14** wird beispielsweise durch Schweißen, vorzugsweise durch Widerstandsschweißen erzeugt. Bei Verbindungen an den Kontaktpunkten **13, 14,** die durch Widerstandsschweißen erzeugt werden, bleibt die Homogenität der Oberfläche bestehen, die Materialien erfahren einen geringen Wärmeeintrag und es kommt nur zu einem geringen Materialverzug.

Das erfindungsgemäße Verbundbauteil **1** ist eine PTL-BPP bzw. bildet eine PTL-BPP. Ein Verbundbauteil **1** kann deshalb in einer elektrochemischen Zellen eine PTL **2** und eine BPP **3** ersetzen.

In einer elektrochemischen Zelle **18** kann der Katalysator auf dem Elektrolyt **19** angeordnet sein, beispielsweise kann der Elektrolyt **19** mit Katalysator beschichtet sein. In besonders bevorzugten Ausführungsformen ist oder umfasst der Elektrolyt **19** eine Membran und die Membran ist mit Katalysator beschichtet (= katalysatorbeschichtete Membran = CCM). Die Kombination der drei Schichten in dem Verbundbauteil **1** hat den Vorteil, dass die Schicht poröses Sintermetall **4,** welches in einer elektrochemischen Zelle **18** dem Elektrolyt **19** zugewandt ist, eine besonders homogene Oberfläche aufweist und somit einen guten Kontakt zum Katalysator bildet, wenn der Elektrolyt **19** mit Katalysator beschichtet ist. Dadurch ist ein guter Kontakt zwischen der Schicht porösen Sintermetalls **4,** die die PTL **2** in dem Verbundbauteil **1** bildet, und Katalysatorschicht gewährleistet. Dieser Kontakt ist für die elektrochemische Reaktion und somit für den Wirkungsgrad der elektrochemischen Zelle **18** besonders relevant.

In alternativen Ausführungsformen umfasst das Verbundbauteil **1** eine Schicht Katalysator. Gegenstand der Erfindung ist ein Verbundbauteil **1** für elektrochemischen Zellen **18** zur Verwendung als poröse Transportschicht (PTL) **2** und Bipolarplatte (BPP) **3** umfassend oder bestehend aus

eine Schicht poröses Sintermetall **4,**
eine Schicht Streckmetall **7,**
ein Blech **10,**
eine Schicht Katalysator,
wobei die Schicht poröses Sintermetall **4** eine erste Flachseite **5** und eine der ersten Flachseite gegenüberliegende zweite Flachseite **6** aufweist,
wobei die Schicht Streckmetall **7** eine erste Flachseite **8** und eine der ersten Flachseite gegenüberliegende zweite Flachseite **9** aufweist,
wobei das Blech **10** eine erste Flachseite **11** und eine der ersten Flachseite gegenüberliegende zweite Flachseite **12** aufweist,
wobei die Schicht Streckmetall **7** zwischen der Schicht porösem Sintermetall **4** und dem Blech **10** angeordnet ist und
wobei die erste Flachseite der Schicht Streckmetall **8** mit der zweiten Flachseite der Schicht porösen Sintermetalls **6** verbunden ist und
die zweite Flachseite der Schicht Streckmetall **8** mit dem Blech **10** verbunden ist und wobei die erste Flachseite der Schicht porösen Sintermetalls **5** mit der Schicht Katalysator beschichtet ist.

Die Kombination der vier Schichten in dem Verbundbauteil **1** hat den Vorteil, dass die Schicht poröses Sintermetall **4,** deren erste Flachseite **5** mit der Schicht Katalysator beschichtet ist, die in einer elektrochemischen Zelle **18** dem Elektrolyt **19,** beispielsweise einer Membran, zugewandt ist, eine besonders homogene Oberfläche aufweist und somit einen guten Kontakt zum Elektrolyt **19,** z.B. der Membran, ausbildet. Dadurch ist ein guter Kontakt zwischen der Katalysatorschicht des Verbundbauteils **1** und Elektrolyt **19** gewährleistet. Dieser Kontakt ist für die elektrochemische Reaktion und somit für den Wirkungsgrad der elektrochemischen Zelle **18** besonders relevant.

Wird in einer elektrochemischen Zelle **18** eine Membranen als Elektrolyt **19** verwendet, ist eine homogene Oberfläche der PTL **2** bzw. der ersten Flachseite der Schicht porösen Sintermetalls **5** zusätzlich wichtig, um eine mechanische Beschädigung der Membran auszuschließen.

Vorzugsweise umfasst die Schicht poröses Sintermetall **4** Partikel bzw. ist aus Partikeln aufgebaut. Vorzugsweise weisen die Partikel einen Partikeldurchmesser von < 45 $\mu$m auf, besonders bevorzugt einen Partikeldurchmesser von < 20 $\mu$m.

Vorzugsweise weist die erste Flachseite der Schicht porösen Sintermetalls **5,** die in einer elektrochemischen Zelle **18** dem Elektrolyt **19,** beispielsweise einer Membran, zugewandt ist, eine Oberflächenrauhigkeit < 30 $\mu$m auf, besonders bevorzugt eine Oberflächenrauhigkeit < 10 $\mu$m.

Vorzugsweise weist die Schicht poröses Sintermetall **4** einen elektrischen Durchgangswiderstand < 5 m$\Omega$·cm$^2$ bei 2 MPa auf, besonders bevorzugt einen elektrischen Durchgangswiderstand < 4 m$\Omega$·cm$^2$ bei 2 MPa.

Vorzugsweise weist die Schicht poröses Sintermetall **4** eine Dicke < 0,5 mm auf, besonders bevorzugt eine Dicke < 0,4 mm.

Vorzugsweise weist die Schicht poröses Sintermetall **4** eine Porosität von 40 - 60 % auf, besonders bevorzugt eine Porosität von 45 - 55 %, insbesondere eine Porosität von etwa 50 %.

Für die gute Medienführung im Verbundbauteil **1** sorgt die Schicht Streckmetall **7**. Durch die Einfachheit in der Produktion stellen Streckmetalle eine Alternative zu der Strömungsverteilerstruktur einer BPP **3** dar. Die Schicht Streckmetall **7** kann beispielsweise dadurch hergestellt werden, dass Einschnitte in ein Metallblech gemacht werden und eine anschließende Streckung durchgeführt wird. Dadurch entstehen die typischen rautenförmigen Öffnungen (= Maschen) in der Schicht Streckmetall **7**. Die Maschen des Streckmetalls dienen in der elektrochemischen Zelle **18** der Medienverteilung. Bei der Herstellung der Schicht Streckmetall **7** geht weder Material verloren, noch muss das Material anderweitig bearbeitet werden.

Vorzugsweise weist die Schicht Streckmetall **7** eine Maschenweite (definiert durch das Verhältnis von Maschenlänge zu Maschenbreite) von z.B. Maschenlänge zu Maschenbreite von 3 zu 6 auf. Kleinere oder größere Maschenweiten sind ebenfalls möglich. Entsprechend geeignete Maschenweiten können je nach Fläche der elektrochemischen Zelle ausgewählt werden.

Vorzugsweise weist die Schicht Streckmetall **7** eine Dicke < 2 mm auf, besonders bevorzugt eine Dicke von < 1,5 mm, insbesondere eine Dicke von < 1 mm.

Vorzugsweise weist die Schicht Streckmetall **7** einen elektrischen Durchgangswiderstand < 5 m$\Omega$·cm$^2$ bei 2 MPa auf, besonders bevorzugt einen elektrischen Durchgangswiderstand < 4 m$\Omega$·cm$^2$ bei 2 MPa.

Vorzugsweise wird die BPP **3** in dem Verbundbauteil **1** als Blech **10** ausgeführt. Vorzugsweise ist das Blech **10** ein flaches Blech **10**. Vorzugsweise weist das Blech **10** eine Dicke < 0,5 mm (= flaches Blech) auf, besonders bevorzugt eine Dicke < 0,4 mm (= flaches Blech).

Das Blech **10** muss nicht mechanisch bearbeitet werden und ist dadurch besonders kostengünstig. Außerdem bietet ein flaches Blech **10** die Möglichkeit, an eine Schicht Streckmetall **7** und eine Schicht poröses Sintermetall **4** angeschweißt werden zu können. Dadurch entfällt der Kontaktwiderstand zwischen BPP **3** und PTL **2** und der Wirkungsgrad der elektrochemischen Zelle steigt.

Das erfindungsgemäße Verbundbauteil **1** bietet somit eine gute Medienführung, einen guten Kontakt zur Katalysatorschicht, hat aber im Vergleich zu üblichen Zellaufbauten elektrochemischer Zellen **18** einen geringeren elektrischen Widerstand.

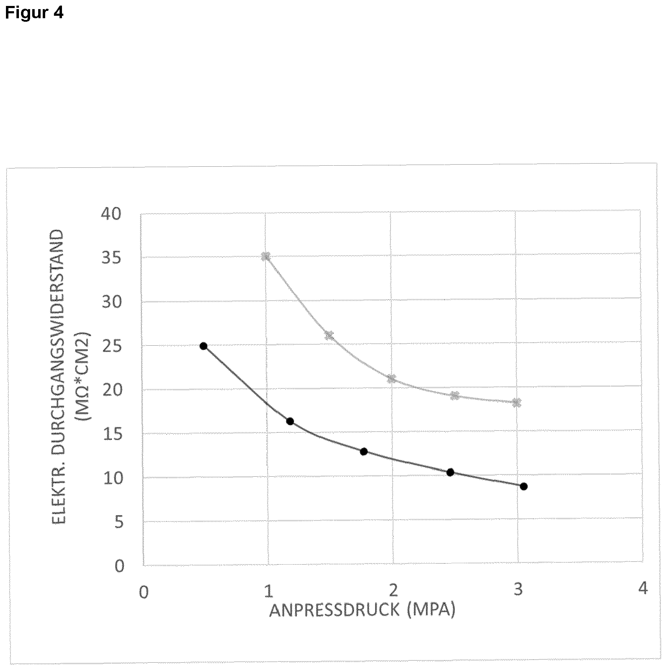

**Figur 4** zeigt den elektrischen Durchgangswiderstand durch ein erfindungsgemäßes Verbundbauteil **1** mit einer Gesamtdicke von 2,5 mm im Vergleich zu einer PTL **2** mit einer Dicke von 0,5 mm auf einer BPP **3** mit einer Dicke von 2 mm, wobei die BPP **3** eine Strömungsverteilerstruktur (Flow Field) mit einer Kanal- und Stegweite von jeweils 1 mm aufweist. Der elektrische Durchgangswiderstand des Verbundbauteils **1** ist bis zu 50 % geringer als der elektrische Durchgangswiderstand der PTL **2** und BPP **3** gleicher Gesamtdicke, weil der Kontaktwiderstand des Verbundbauteils **1** im Vergleich zum Kontaktwiderstand der PTL **2** und BPP **3** reduziert wurde.

In dem Verbundbauteil **1** ersetzt die Schicht Streckmetall **7** die Strömungsverteilerstruktur einer BPP **3**. Durch den Ersatz der Strömungsverteilerstruktur einer BPP **3** durch eine Schicht Streckmetall **7** können Herstellungskosten eingespart werden. Ebenso können die Herstellungskosten dadurch eingespart werden, dass eine Beschichtung zwischen BPP **3** und PTL **2** eingespart werden kann.

Gegenstand der Erfindung ist eine elektrochemische Zelle **18,** die einen Elektrolyt **19,** einen Rahmen **20** und mindestens ein erfindungsgemäßes Verbundbauteil **1** umfasst. Vorzugsweise umfasst die erfindungsgemäße elektrochemische Zelle **18** einen Rahmen **20,** einen Elektrolyt **19** und mindestens ein erfindungsgemäßes Verbundbauteil **1,** wobei das Verbundbauteil **1** parallel zum Elektrolyt **19** in dem Rahmen **20** angeordnet ist, wobei die erste Flachseite der Schicht poröses Sintermetall **5** dem Elektrolyt **19** zugewandt und parallel zum Elektrolyt **19** angeordnet ist und wobei die erste Flachseite der Schicht poröses Sintermetall **5** mit dem Elektrolyt**19** in Kontakt ist und wobei der Elektrolyt **19** vorzugsweise eine Katalysatorschicht umfasst, vorzugsweise eine katalysatorbeschichtete Membran,

Vorzugsweise umfasst die erfindungsgemäße elektrochemische Zelle **18** einen Elektrolyt **19,** vorzugsweise eine Membran, einen Rahmen **20** und mindestens ein erfindungsgemäßes Verbundbauteil **1,** wobei das Verbundbauteil **1** parallel zum Elektrolyt **19** in dem Rahmen **20** angeordnet ist,

wobei die erste Flachseite der Schicht poröses Sintermetall **5** mit einer Schicht Katalysator beschichtet und dem Elektrolyt **19** zugewandt und parallel zum Elektrolyt **19** angeordnet ist und

wobei die Schicht Katalysator mit dem Elektrolyt **19** in Kontakt ist.

Vorzugsweise umfasst die erfindungsgemäße elektrochemische Zelle ein zweites erfindungsgemäßes Verbundbauteil **1**, wobei das Verbundbauteil **1** parallel zum Elektrolyt **19** angeordnet ist,

wobei die erste Flachseite der Schicht poröses Sintermetall **5** dem Elektrolyt **19** zugewandt und parallel zum Elektrolyt **19** angeordnet ist und

wobei die erste Flachseite der Schicht poröses Sintermetall **5** mit dem Elektrolyt **19** in Kontakt ist. In einigen Ausführungsformen der erfindungsgemäßen elektrochemischen Zelle **18** umfasst das Verbundbauteil **1** auf der ersten Flachseite der Schicht poröses Sintermetall **5** eine Schicht Katalysator. In alternativen Ausführungsformen der erfindungsgemäßen elektrochemischen Zelle **18** umfasst der Elektrolyt **19** Katalysator, vorzugsweise ist der Elektrolyt **19** eine Membran und umfasst eine Katalysatorschicht.

Gegenstand der Erfindung ist ferner ein Bauteil für einen Stapel elektrochemischer Zellen **21** umfassend einen Elektrolyt (z.B. eine katalysatorbeschichtete Membran) **19**, einen Rahmen **20**, eine PTL **2** und ein erfindungsgemäßes Verbundbauteil **1**, wobei das Verbundbauteil **1** und der Elektrolyt **19** in dem Rahmen **20** angeordnet sind, wobei die erste Flachseite der Schicht poröses Sintermetall **5** der einen Seite des Elektrolyten **19** zugewandt und parallel zum Elektrolyt **19** angeordnet ist und mit dem Elektrolyt **19** in Kontakt ist und

wobei die PTL **2** auf der anderen Seite dem Elektrolyt **19** und parallel zum Elektrolyt **19** in dem Rahmen **20** angeordnet ist. In einigen Ausführungsformen des erfindungsgemäßen Bauteils für einen Stapel elektrochemischer Zellen **21** umfasst das Verbundbauteil **1** auf der ersten Flachseite der Schicht poröses Sintermetall **5** eine Schicht Katalysator. In alternativen Ausführungsformen des erfindungsgemäßen Bauteils für einen Stapel elektrochemischer Zellen **21** umfasst der Elektrolyt **19** Katalysator, vorzugsweise ist der Elektrolyt **19** eine Membran und umfasst eine Katalysatorschicht.

Gegenstand der Erfindung ist auch ein Stapel elektrochemischer Zellen **22** umfassend mindesten 5 erfindungsgemäße Bauteile für einen Stapel elektrochemischer Zellen **21** und zwei Endplatten **23**, wobei die Bauteile für einen Stapel elektrochemischer Zellen **21** übereinandergestapelt und mittels der zwei Endplatten verpresst sind.

**Figur 1** zeigt schematisch die Medienführung und den Elektronenfluss in einer elektrochemischen Zelle **18** mit BPP **3**, PTL **2** und Elektrolyt **19**. Die BPP **3** umfasst zur Medienführung eine Strömungsverteilerstruktur **24.**

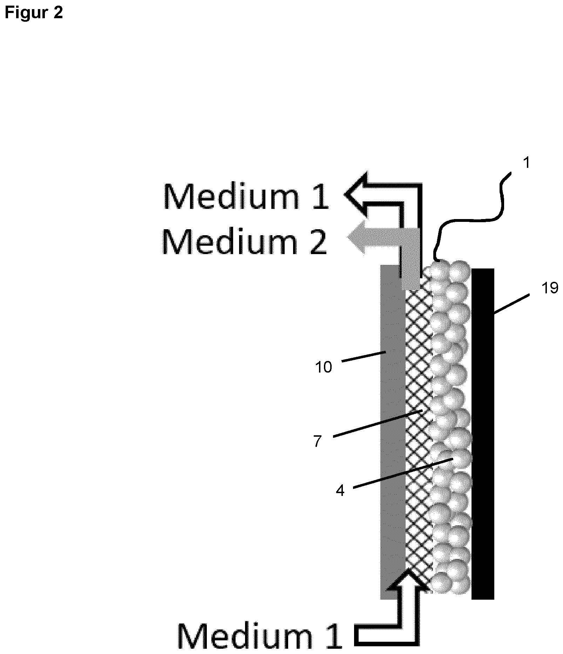

**Figur 2** zeigt schematisch die Anordnung von Verbundbauteil **1** und Elektrolyt **19** und die Medienführung in einer elektrochemischen Zelle **18**, die Anstelle einer PTL **2** und einer BPP **3** ein Verbundbauteil **1** umfasst.

**Figur 3a** zeigt eine schematische Darstellung eines Verbundbauteils **1** mit Anordnung der drei Schichten, inklusive Darstellung der Anordnung der Flachseiten der drei Schichten und der Dicke der drei Schichten.

**Figur 3b** zeigt die Schicht poröses Sintermetall **4** und die Schicht Streckmetall **7,** die an den Kontaktpunkten **13** durch Widerstandsschweißen verbunden sind.

**Figur 4** zeigt den elektrischen Durchgangswiderstand in Abhängigkeit vom Anpressdruck in einer elektrochemischen Zelle **18**. Dabei wurde eine elektrochemische Zelle **18** mit einem Verbundbauteil **1** (d.h. eine PTL-BPP) (Gesamtdicke 2,5 mm) zwischen zwei Stempel gelegt und über eine Presse Druck aufgebracht und der Widerstand gemessen.

Die Messwerte der elektrochemischen Zelle **18,** die das Verbundbauteil **1** umfasst, sind als " ▪ " dargestellt. Zum Vergleich wurde eine elektrochemische Zelle **18**, die anstelle des Verbundbauteils **1** eine PTL **2** (Dicke 0,5 mm) und eine BPP **3** (Dicke 2 mm) mit Flow Field (Kanal- und Stegweite jeweils 1 mm) aufweist, zwischen zwei Stempel gelegt und über die Presse Druck aufgebracht und der Widerstand gemessen. Die Messwerte dieser elektrochemischen Zelle **18** sind als "x" dargestellt.

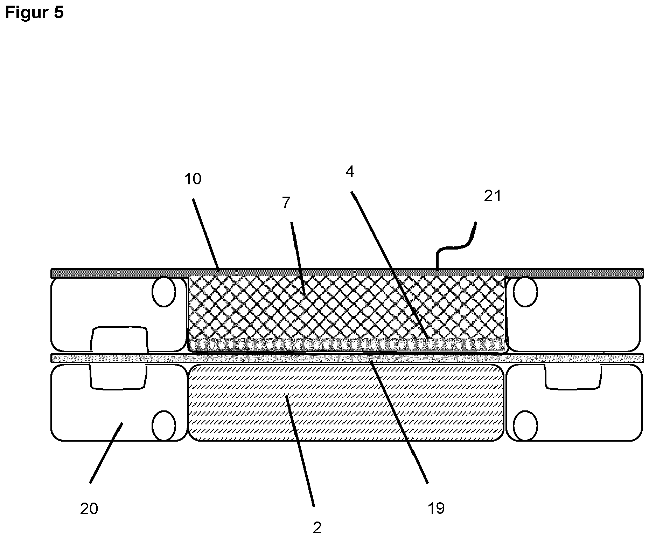

**Figur 5** zeigt eine elektrochemische Zelle **18**, die ein Verbundbauteil **1** umfasst.

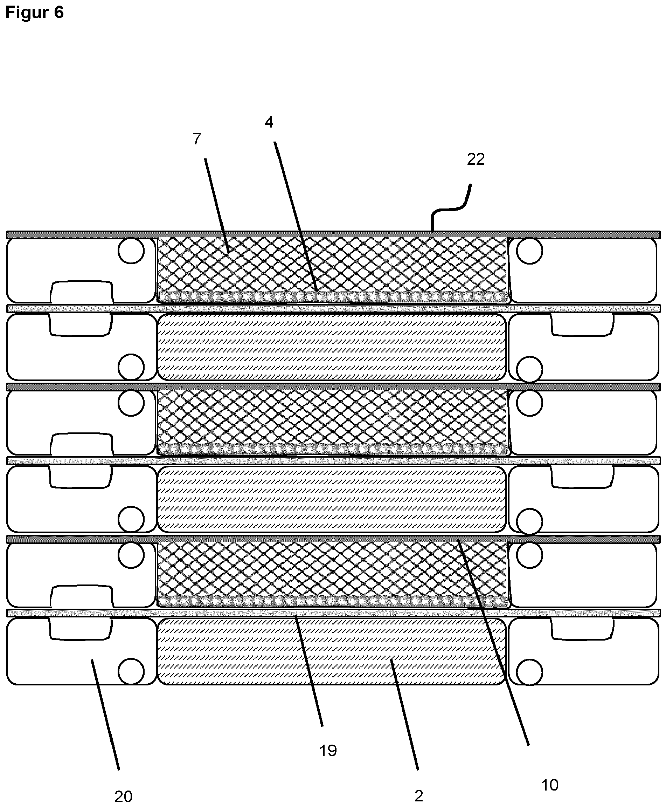

**Figur 6** zeigt einen Ausschnitt aus einem Stapel elektrochemischer Zellen **22,** wobei die einzelnen elektrochemischen Zellen **18** Verbundbauteile **1** umfassen.

Bezugszeichenliste

|  | Bezugszeichen |
|---|---|
| Verbundbauteil | 1 |
| Poröse Transportschicht (PTL) | 2 |
| Bipolarplatte (BBP) | 3 |
| Schicht poröses Sintermetall | 4 |
| erste Flachseite der Schicht porösen Sintermetalls | 5 |
| zweite Flachseite der Schicht porösen Sintermetalls | 6 |
| Schicht Streckmetall | 7 |
| erste Flachseite der Schicht Streckmetall | 8 |
| zweite Flachseite der Schicht Streckmetall | 9 |
| Blech | 10 |
| erste Flachseite des Blechs | 11 |
| zweite Flachseite des Blechs | 12 |
| Kontaktpunkt zwischen porösem Sintermetall und Streckmetall | 13 |
| Kontaktpunkt zwischen Blech und Streckmetall | 14 |
| Dicke der Schicht porösen Sintermetalls | 15 |
| Dicke der Schicht Streckmetall | 16 |
| Dicke des Blechs | 17 |
| Elektrochemische Zelle | 18 |
| Elektrolyt (z.B. katalysatorbeschichtete Membran) | 19 |
| Rahmen | 20 |
| Bauteil für einen Stapel elektrochemischer Zellen | 21 |
| Stapel elektrochemischer Zellen | 22 |
| Endplatte | 23 |
| Strömungsverteilerstruktur | 24 |

**Patentansprüche**

1. Verbundbauteil (1) für elektrochemischen Zellen zur Verwendung als poröse Transportschicht (PTL) (2) und Bipolarplatte (BPP) (3) umfassend

eine Schicht poröses Sintermetall (4),
eine Schicht Streckmetall (7),
ein Blech (10),
wobei die Schicht poröses Sintermetall (4) eine erste Flachseite (5) und eine der ersten Flachseite gegenüberliegende zweite Flachseite (6) aufweist,
wobei die Schicht Streckmetall (7) eine erste Flachseite (8) und eine der ersten Flachseite gegenüberliegende zweite Flachseite (9) aufweist,
wobei das Blech (10) eine erste Flachseite (11) und eine der ersten Flachseite gegenüberliegende zweite Flachseite (12) aufweist,
wobei die Schicht Streckmetall (7) zwischen der Schicht porösem Sintermetall (4) und dem Blech (10) angeordnet ist und
wobei die erste Flachseite der Schicht Streckmetall (8) mit der Schicht porösem Sintermetall (4) verbunden ist und die zweite Flachseite der Schicht Streckmetall (8) mit dem Blech (10) verbunden ist und

wobei das Verbundbauteil **(1)** gegebenenfalls eine Schicht Katalysator umfasst.

2. Verbundbauteil **(1)** nach Anspruch 1 **dadurch gekennzeichnet, dass** die Schicht poröses Sintermetall **(4),** die Schicht Streckmetall **(7)** und das Blech **(10)** aus demselben Material bestehen.

3. Verbundbauteil **(1)** nach einem der vorgehenden Ansprüche **dadurch gekennzeichnet, dass** die erste Flachseite der Schicht Streckmetall **(8)** und die zweite Flachseite der Schicht poröses Sintermetall **(6)** mindestens einen Kontaktpunkt **(13)** aufweisen und die erste Flachseite der Schicht Streckmetall **(8)** und die zweite Flachseite der Schicht poröses Sintermetall **(6)** an dem mindestens einen Kontaktpunkt **(13)** mittels Widerstandsschweißen miteinander verbunden sind und
   wobei die erste Flachseite poröses Sintermetall **(5)** gegebenenfalls mit einer Schicht Katalysator beschichtet ist.

4. Verbundbauteil **(1)** nach einem der vorgehenden Ansprüche **dadurch gekennzeichnet, dass** die zweite Flachseite der Schicht Streckmetall **(9)** und die erste Flachseite des Blechs **(11)** mindestens einen Kontaktpunkt **(14)** aufweisen und die zweite Flachseite der Schicht Streckmetall **(9)** und die erste Flachseite des Blechs **(11)** an dem mindestens einen Kontaktpunkt **(14)** mittels Widerstandsschweißen miteinander verbunden sind.

5. Verbundbauteil **(1)** nach einem der vorgehenden Ansprüche **dadurch gekennzeichnet, dass** die Schicht poröses Sintermetall **(4)** Partikel umfasst und die Partikel einen Partikeldurchmesser von < 45 µm aufweisen.

6. Verbundbauteil **(1)** nach einem der vorgehenden Ansprüche **dadurch gekennzeichnet, dass** die erste Flachseite der Schicht porösen Sintermetalls **(5),** die gegebenenfalls mit einer Schicht Katalysator beschichtet ist und die in einer elektrochemischen Zelle **(18)** dem Elektrolyt **(19)** zugewandt ist, eine Oberflächenrauhigkeit < 30 µm aufweist.

7. Verbundbauteil **(1)** nach einem der vorgehenden Ansprüche **dadurch gekennzeichnet, dass** die Schicht poröses Sintermetall **(4)** einen elektrischen Durchgangswiderstand < 5 mΩ·cm$^2$ bei 2 MPa aufweist.

8. Verbundbauteil **(1)** nach einem der vorgehenden Ansprüche **dadurch gekennzeichnet, dass** die Schicht poröses Sintermetall **(4)** eine Dicke **(15)** < 0,5 mm aufweist.

9. Verbundbauteil **(1)** nach einem der vorgehenden Ansprüche **dadurch gekennzeichnet, dass** die Schicht poröses Sintermetall **(4)** eine Porosität von etwa 50 % aufweist.

10. Verbundbauteil **(1)** nach einem der vorgehenden Ansprüche **dadurch gekennzeichnet, dass** die Schicht Streckmetall **(7)** eine Dicke **(16)** < 1,5 mm aufweist.

11. Verbundbauteil **(1)** nach einem der vorgehenden Ansprüche, **dadurch gekennzeichnet, dass** die Schicht Streckmetall **(7)** einen elektrischen Durchgangswiderstand < 5 mΩ·cm$^2$ bei 2 MPa aufweist.

12. Elektrochemische Zelle **(18)** umfassend einen Elektrolyt **(19),** einen Rahmen **(20)** und mindestens ein Verbundbauteil **(1)** nach einem der Ansprüche 1 bis 11 als PTL **(2)** und BBP **(3),** wobei das Verbundbauteil **(1)** parallel zum Elektrolyt **(19)** in dem Rahmen **(20)** angeordnet ist,

    wobei die erste Flachseite der Schicht poröses Sintermetall **(5)** dem Elektrolyt **(19)** zugewandt und parallel zum Elektrolyt **(19)** angeordnet ist und
    wobei die erste Flachseite der Schicht poröses Sintermetall **(5),** die gegebenenfalls mit einer Schicht Katalysator beschichtet ist, mit dem Elektrolyt **(19)** in Kontakt ist.

13. Elektrochemische Zelle **(18)** nach Anspruch 12 umfassend ein zweites Verbundbauteil **(1)** nach einem der Ansprüche 1 bis 11 als PTL **(2)** und BBP **(3),** wobei das Verbundbauteil **(1)** parallel zum Elektrolyt **(19)** angeordnet ist,

    wobei die erste Flachseite der Schicht poröses Sintermetall **(5),** die gegebenenfalls mit einer Schicht Katalysator beschichtet und dem Elektrolyt **(19)** zugewandt und parallel zum Elektrolyt **(19)** angeordnet ist und
    wobei die erste Flachseite der Schicht poröses Sintermetall **(5)** mit dem Elektrolyt **(19)** in Kontakt ist.

14. Bauteil für einen Stapel elektrochemischer Zellen **(21)** umfassend eine elektrochemische Zelle **(18)** nach Anspruch 12 und eine PTL **(2),** wobei die PTL **(2)** parallel zum Elektrolyt **(19)** in dem Rahmen **(20)** angeordnet ist.

15. Stapel elektrochemischer Zellen **(22)** umfassend mindesten 5 Bauteile für einen Stapel elektrochemischer Zellen **(21)** nach Anspruch 14 und zwei Endplatten **(23),** wobei die Bauteile für einen Stapel elektrochemischer Zellen **(21)** übereinandergestapelt und mittels der zwei Endplatten **(23)** verpresst sind.

**Figur 1**

Medium 1

Medium 2

2

3

19

24

e-

24

e-

24

Medium 1

**Figur 2**

Medium 1

Medium 2

1

19

10

7

4

Medium 1

**Figur 3a**

**Figur 3b**

**Figur 4**

**Figur 5**

**Figur 6**

Europäisches Patentamt
European Patent Office
Office européen des brevets

# EUROPÄISCHER RECHERCHENBERICHT

**Nummer der Anmeldung**

**EP 22 19 6772**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 00/69003 A2 (LYNNTECH INC [US]) 16. November 2000 (2000-11-16) * Zusammenfassung * * Ansprüche 1-16 * ----- | 1-15 | INV. H01M4/86 H01M4/88 H01M8/0232 |
| X | EP 0 629 015 A1 (PERMELEC SPA NORA [IT]) 14. Dezember 1994 (1994-12-14) * Ansprüche 1-26 * ----- | 1-15 | ADD. H01M8/0245 |
| A | EP 3 331 075 A1 (BOSCH GMBH ROBERT [DE]) 6. Juni 2018 (2018-06-06) * Ansprüche 1-14 * * Absatz [0023] * ----- | 1-15 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 28. Februar 2023 | Haering, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 6772

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-02-2023

| Im Recherchenbericht angeführtes Patentdokument | Datum der Veröffentlichung | Mitglied(er) der Patentfamilie | Datum der Veröffentlichung |
|---|---|---|---|
| WO 0069003 A2 | 16-11-2000 | AT 292326 T | 15-04-2005 |
| | | AU 4816500 A | 21-11-2000 |
| | | DE 60019139 T2 | 11-05-2006 |
| | | EP 1214749 A2 | 19-06-2002 |
| | | EP 1513206 A2 | 09-03-2005 |
| | | ES 2237427 T3 | 01-08-2005 |
| | | TW 475293 B | 01-02-2002 |
| | | US 6232010 B1 | 15-05-2001 |
| | | US 6562507 B1 | 13-05-2003 |
| | | US 2003124411 A1 | 03-07-2003 |
| | | WO 0069003 A2 | 16-11-2000 |
| EP 0629015 A1 | 14-12-1994 | AT 210339 T | 15-12-2001 |
| | | AU 674931 B2 | 16-01-1997 |
| | | BR 9401641 A | 22-11-1994 |
| | | CA 2121455 A1 | 31-10-1994 |
| | | CN 1108005 A | 06-09-1995 |
| | | DE 69429304 T2 | 24-10-2002 |
| | | DK 0629015 T3 | 02-04-2002 |
| | | EP 0629015 A1 | 14-12-1994 |
| | | ES 2169050 T3 | 01-07-2002 |
| | | FI 941932 A | 31-10-1994 |
| | | IT 1270878 B | 13-05-1997 |
| | | JP 2953555 B2 | 27-09-1999 |
| | | JP H06349508 A | 22-12-1994 |
| | | RU 2126569 C1 | 20-02-1999 |
| | | SK 50694 A3 | 09-11-1994 |
| | | US 5482792 A | 09-01-1996 |
| | | US 5565072 A | 15-10-1996 |
| | | US 5578388 A | 26-11-1996 |
| EP 3331075 A1 | 06-06-2018 | CN 108123157 A | 05-06-2018 |
| | | DE 102016223781 A1 | 30-05-2018 |
| | | EP 3331075 A1 | 06-06-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8945790 B2
- WO 2020020467 A1
- EP 3958360 A1
- EP 3011625 B1
- DE 102015111918 A1
- WO 2018078157 A
- EP 2985096 B1
- US 6280870 B1
- WO 2004086542 A2
- EP 3686318 A1

**In der Beschreibung aufgeführte Nicht-Patentliteratur**

- **GRIGORIEV, S.A. ; P. MILLET ; S.A. VOLOBUEV ; V.N. FATEEV.** Optimization of porous current collectors for PEM water electrolysers. *International Journal of Hydrogen Energy,* 2009, vol. 34 (11), 4968-4973
- **AYERS, K.E. ; E.B. ANDERSON ; C. CAPUANO ; B. CARTER ; L. DALTON ; G. HANLON ; J. MANCO ; M. NIEDZWIECKI.** Research Advances towards Low Cost, High Efficiency PEM Electrolysis. *ECS Transactions,* 2010, vol. 33 (1), 3-15